(19) Europäisches Patentamt
European Patent Office
Office européen des brevets

(11) **EP 3 775 791 B1**

(12) **EUROPÄISCHE PATENTSCHRIFT**

(45) Veröffentlichungstag und Bekanntmachung des Hinweises auf die Patenterteilung:
**04.05.2022 Patentblatt 2022/18**

(21) Anmeldenummer: **19709906.2**

(22) Anmeldetag: **07.03.2019**

(51) Internationale Patentklassifikation (IPC):
**G01F 1/58** *(2006.01)* **G01F 25/00** *(2022.01)*

(52) Gemeinsame Patentklassifikation (CPC):
**G01F 1/58; G01F 25/10**

(86) Internationale Anmeldenummer:
**PCT/EP2019/055720**

(87) Internationale Veröffentlichungsnummer:
**WO 2019/192799 (10.10.2019 Gazette 2019/41)**

(54) **MAGNETISCH-INDUKTIVES DURCHFLUSSMESSGERÄT UND MESSSTELLE MIT EINEM SOLCHEN MAGNETISCH-INDUKTIVEN DURCHFLUSSMESSGERÄT**

MAGNETIC-INDUCTIVE FLOW METER AND MEASURING UNIT WITH SUCH A MAGNETIC-INDUCTIVE FLOW METER

COMPTEUR DE DÉBIT MAGNETIQUE-INDUCTIF ET UNITÉ DE MESURE COMPORTANT UN TEL COMPTEUR DE DÉBIT MAGNETIQUE-INDUCTIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.04.2018 DE 102018108197**

(43) Veröffentlichungstag der Anmeldung:
**17.02.2021 Patentblatt 2021/07**

(73) Patentinhaber: **Endress + Hauser Flowtec AG**
**4153 Reinach (CH)**

(72) Erfinder: **MARIAGER, Simon**
**4059 Basel (CH)**

(74) Vertreter: **Andres, Angelika Maria**
**Endress+Hauser Group Services**
**(Deutschland) AG+Co. KG**
**Colmarer Straße 6**
**79576 Weil am Rhein (DE)**

(56) Entgegenhaltungen:
WO-A1-2017/025314    DE-A1-102011 079 352
DE-B- 1 227 677    US-A- 6 094 992
US-A1- 2010 107 776

**Beschreibung**

Die vorliegende Erfindung betrifft ein magnetisch-induktives Durchflussmessgerät umfassend mindestens zwei Elektrodenpaare zur Messung der Durchflussgeschwindigkeit oder des Volumendurchflusses eines Mediums mit einem rotationsunsymmetrischen Strömungsprofil.

Magnetisch-induktive Durchflussmessgeräte werden zur Bestimmung der Durchflussgeschwindigkeit und des Volumendurchflusses eines Mediums in einem Messrohr eingesetzt. Ein magnetisch-induktives Durchflussmessgerät besteht aus einem Magnetsystem, das ein Magnetfeld senkrecht zur Flussrichtung des Mediums erzeugt. Dafür werden üblicherweise einzelne oder mehrere Spulen verwendet. Um ein überwiegend homogenes Magnetfeld zu realisieren, werden zusätzlich Polschuhe so geformt und angebracht, dass die Magnetfeldlinien über den gesamten Rohrquerschnitt im Wesentlichen senkrecht zur Messrohrachse verlaufen. Ein an die Mantelfläche des Messrohres angebrachtes Elektrodenpaar greift eine senkrecht zur Flussrichtung und zum Magnetfeld anliegende elektrische Spannung ab, die entsteht, wenn ein leitfähiges Medium bei angelegtem Magnetfeld in Flussrichtung fließt. Da die abgegriffene Spannung laut Faraday'schem Induktionsgesetz von der Geschwindigkeit des fließenden Mediums abhängt, kann aus der Spannung die Durchflussgeschwindigkeit u und, mit Hinzunahme eines bekannten Rohrquerschnitts, der Volumendurchfluss V ermittelt werden.

Magnetisch-induktive Durchflussmessgeräte sind empfindlich gegenüber dem Strömungsprofil des Mediums. Abhängig vom Rohrsystem und Messgerät können Messfehler von mehreren Prozent auftreten. Üblicherweise wird daher ein Geradrohr, dessen Länge mindestens das Fünf- bis Zehnfache der Nennweite des Messrohres entspricht, an die einlaufseitige Stirnfläche eingebaut. Es sind allerdings Anwendungen bekannt, in welchen dieser Mindestabstand, die sogenannte Einlaufstrecke, nicht eingehalten werden kann. Das ist zum Beispiel dann der Fall, wenn sich ein Rohrsystem auf engstem Raum befindet. Eine Lösung liefert die in DE 10 2014113408 A1 offenbarte Erfindung, bei der eine Verengung des Rohrdurchmessers zur Konditionierung des Flusses führt, wodurch der Einfluss des Strömungsprofils minimiert wird, so dass eine 0-DN Einlaufstrecke verwendet werden kann. Dieser Ausgestaltung nachteilig ist aber, dass zwar eine geringere Empfindlichkeit gegenüber rotationsunsymmetrischer Strömungsprofile realisiert werden kann, dafür aber ein Druckverlust in Kauf genommen werden muss. Außerdem beschränkt sich diese Ausgestaltung auf Rohrsysteme mit DN<350.

Die Empfindlichkeit der Durchflussmessung gegenüber einem rotationsunsymmetrischen Strömungs-profil hängt von der Geometrie des Messrohres und der Elektroden ab. Daher müssen die Einflüsse der Rohr- und Elektrodengeometrie für die korrekte Beschreibung der geschwindigkeitsabhängigen Induktionsspannung berücksichtigt werden. Die beiden genannten Einflüsse werden mathematisch durch eine Gewichtsfunktion *GF* beschrieben.

Der Einfluss der Geometrie auf den Durchfluss lässt sich am besten an folgendem Zusammenhang verdeutlichen:

$$U(x) = \int\limits_{V} v(x')\, GF(x',x)\, dV$$

wobei für die Bestimmung der Spannung *U(x)*, die Strömungsgeschwindigkeit *v(x')* und die Gewichtsfunktion *GF(x',x)* über das Volumen des Messrohres integriert werden. Dabei wird die Gewichtsfunktion *GF* anhand *GF(x',x) = B × ∇G(x',x)*, mit dem Magnetfeld *B(x')* und einer Greenschen Funktion G, die von den elektrischen Randbedingungen gegeben wird, beschrieben. Das Ziel eines Optimierungsverfahrens ist es nun die Geometrie des Aufbaus dahingehend zu optimieren, dass im gesamten Strömungsprofil V × *GF* = 0 gilt. Dies ist jedoch für ein Rohr mit einem einzelnen punktförmigen Elektrodenpaar nicht möglich. Einen möglichen Lösungsansatz liefert die Anpassung der Elektrodenform. Dies ist jedoch nicht praktisch und verursacht neue Schwierigkeiten. Ein weiterer Lösungsansatz besteht darin, mehrere Elektrodenpaaren zu verwenden.

So ist beispielsweise aus der CN 101294832 A ein magnetisch-induktives Durchflussmessgerät bekannt, das zwei Elektrodenpaare aufweist, die achsensymmetrisch in einem Rohrquerschnitt angeordnet sind, um somit den Einfluss des Strömungsprofils auf die Bestimmung des Volumendurchflusses zu minimieren. Die beiden durch die jeweiligen Elektrodenpaare definierten Elektrodenachsen spannen dabei in dem Querschnitt des Messrohres einen Winkel von ca. 40° auf. Eine weitere Ausführung wird in DE 10 2015113390 A1 gezeigt, in der ein zweites und drittes Elektrodenpaar auf definierten Elektrodenachsen angeordnet sind, die um einen Winkelmaß von kleiner gleich ±45° gegenüber einer zum Magnetfeld senkrecht orientierten ersten Elektrodenachse arrangiert sind.

Die EP 0878694 A1 offenbart ebenfalls ein magnetisch-induktives Durchflussmessgerät, das, ausgehend vom Stand der Technik, durch die Verwendung von zwei zusätzlichen Elektrodenpaaren, deren Elektrodenachsen jeweils einen Winkel von ca. 45° zu der Elektrodenachse des herkömmlichen Elektrodenpaares zur Messrohrachse aufspannen, eine Verbesserung der Messgenauigkeit im Bereich von Messfehlern unter 1% realisiert. Dies wird insbesondere dadurch erreicht, dass die an den Elektroden anliegenden Potentialdifferenzen einzeln erfasst und gewichtet werden. Zudem offenbart die US 6094992 A ein zu der EP 0878694 A1 ähnliches Gerät. Diesen Ausgestaltungen nachteilig ist aber, dass zwar für kleine Durchmesser die Messgenauigkeit optimiert wird, diese aber bei handelsüblichen Messrohren mit großer Nennweite nicht die angestrebte Verringerung der Messfehler erreichen. Außerdem ist nachteilig, dass für jedes Elektrodenpaar ein Gewichtungsfaktor berücksichtigt werden muss, wobei nicht von vornherein klar ist, wie dieser in Abhängigkeit des Rohrsystems bzw. des rotationsunsymmetrischen Strömungsprofils gewählt werden muss.

Ausgehend von dem dargelegten Stand der Technik liegt der vorliegenden Erfindung die Aufgabe zugrunde, ein magnetisch-induktives Durchflussmessgerät bereitzustellen, welches die Einflüsse eines rotationsunsymmetrischen Strömungsprofils bei der Bestimmung der Durchflussgeschwindigkeit und des Volumendurchflusses minimiert.

Die Aufgabe wird erfindungsgemäß durch das magnetisch-induktive Durchflussmessgerät gemäß dem unabhängigen Anspruch 1 und durch eine Messstelle gemäß dem unabhängigen Anspruch 13 gelöst.

Ein erfindungsgemäßes magnetisch-induktives Durchflussmessgerät zur Messung der Durchflussgeschwindigkeit u oder des Volumendurchflusses V eines Mediums gemäß dem unabhängigen Patentanspruch 1 umfasst ein

Messrohr, zum Führen des Mediums in eine durch eine Messrohrachse definierte Längsrichtung, wobei das Messrohr eine einlaufseitige Stirnfläche und eine auslaufseitige Stirnfläche, welche das Messrohr in Längsrichtung abgrenzen, aufweist, mindestens eine in Richtung eines Querschnitts des Messrohres positionierte, magnetfelderzeugende Vorrichtung zum Erzeugen eines im Wesentlichen senkrecht zur Längsrichtung stehenden Magnetfeldes im Medium, wobei die magnetfelderzeugende Vorrichtung durch ein an das Messrohr anliegendes oder ein einen vorgegebenen Mindestabstand aufweisendes, das Magnetfeld in das Medium einkoppelndes Segment, gekennzeichnet ist, wobei das Segment in dem Querschnitt des Messrohres das Messrohr in einem maximalen Kreisbogenwinkel $\beta$ umgreift, ein Elektrodensystem mit mindestens zwei Elektrodenpaaren, die dazu eingerichtet sind, eine senkrecht zum Magnetfeld und zur Längsrichtung induzierte Spannung im Medium zu erfassen, wobei eine vertikale Messrohr-Längsebene das Messrohr in eine erste Seite und in eine zweite Seite einteilt, wobei sich jeweils eine erste Elektrode des Elektrodenpaares auf der ersten Seite des Messrohres befindet, wobei sich jeweils eine zweite Elektrode des Elektrodenpaares auf der zweiten Seite befindet, wobei ein Winkel $\alpha$ in dem Querschnitt des Messrohres einen minimalen Kreissektor aufschlägt, in dem sich die auf jeweils einer Seite des Messrohres befindlichen Elektroden verteilen, dadurch gekennzeichnet, dass die Winkel $\alpha$ und $\beta$ so aufeinander abgestimmt sind, dass das Durchflussmessgerät in dem Maße unempfindlich gegenüber Abweichungen einer rotationssymmetrischen Strömung ist, dass das magnetisch-induktive Durchflussmessgerät bei einer Testmessung einen Messfehler der Durchflussgeschwindigkeit

$$\Delta_u = \left| \frac{u_{va} - u_S}{u_{va}} \right|$$

und/oder einen Messfehler des Volumendurchflusses

$$\Delta_{\dot{V}} = \left| \frac{\dot{V}_{va} - \dot{V}_S}{\dot{V}_{va}} \right|$$

kleiner 1,0%, insbesondere kleiner 0,5% und bevorzugt kleiner 0,2% aufweist, wobei eine Durchflussgeschwindigkeit $u_{va}$ und/oder ein Volumendurchfluss $\dot{V}_{va}$ im Falle einer Strömung mit voll ausgebildeten Strömungsprofil bestimmt werden, wobei eine Durchflussgeschwindigkeit $u_S$ und/oder ein Volumendurchfluss $\dot{V}_S$ im Falle einer rotionsunsymmetrischen Strömung bestimmt werden.

Ein magnetisch-induktives Durchflussmessgerät, das unempfindlich gegenüber einem rotationsunsymmetrischen Strömungsprofil ist, bietet sich idealerweise für die Überwachung von Rohrsystemen an, bei denen eine Einlaufstrecke, deren Länge ein Vielfaches der Nennweite des Messrohres entspricht, nicht realisiert werden kann.

Nach Störungen treten, abhängig vom Abstand und Art der Störung, durch ein nichtideales Strömungsprofil Messfehler auf, da ein magnetisch-induktives Durchflussmessgerät normalerweise davon ausgeht und dahingehend optimiert worden ist, dass ein voll ausgebildetes rotationssymmetrisches Strömungsprofil vorliegt. Als voll ausgebildetes rotationssymmetrisches Strömungsprofil ist dabei das Strömungsprofil zu verstehen, dass sich in Strömungsrichtung nicht mehr ändert. Ein derartiges Strömungsprofil bildet sich beispielsweise in einem Messrohr mit einer Einlaufstrecke, entsprechend der 30-fachen Messrohr-Nennweite, und einer Mediumsgeschwindigkeit von 2 m/s aus.

Im Stand der Technik sind magnetisch-induktive Durchflussmessgeräte mit mindestens zwei Elektrodenpaaren, die einen Winkel $\alpha$ in dem Querschnitt des Messrohres aufschlagen, bereits bekannt. Üblicherweise schlagen benachbarte Elektroden einen Winkel $\delta$ mit festem Winkelwert von ca. $180°/(N + 1)$ auf, wobei die natürliche Zahl N der Anzahl der Elektrodenpaare entspricht. Mit einer Gewichtung der separat an den Elektroden anfallenden Potentialdifferenzen können so Messfehler von unter 1% für rotations-unsymmetrische Strömungsprofile realisiert werden. Es hat sich als erstaunlich herausgestellt, dass der anfallende Messfehler aufgrund eines rotationsunsymmetrischen Strömungsprofils durch die Modifizierung der Winkel $\alpha$ und $\beta$ weiter deutlich reduziert werden kann.

Der Winkel $\beta$ dient dabei als Kenngröße für die magnetfelderzeugende Vorrichtung und gibt an inwieweit das Messrohr durch das das Magnetfeld in das Medium einkoppelnde Segment der magnetfelderzeugenden Vorrichtung in dem Querschnitt umgriffen wird. Während ein kleiner Winkel $\beta$ dafür sorgt, dass die Magnetfeldlinien ausschließlich im Zentrum des Messrohres gebündelt werden, wird durch die Verwendung eines großen Winkels $\beta$ ein annähernd über den gesamten Querschnitt des Messrohres homogenes Magnetfeld realisiert.

Es sind magnetfelderzeugende Vorrichtungen bekannt, die ein Leitblech im Außenbereich und mindestens ein Abschirmelement zwischen einem Polschuh und dem Leitblech und/oder oberhalb des Leitblechs und des Elektromagneten umfassen. Diese Segmente erfüllen die Aufgabe Stör- oder Streufelder zu reduzieren und sind nicht für das Einkoppeln des Magnetfeldes in das Medium verantwortlich.

Das Messrohr ist auf seiner das Medium berührenden Innenseite elektrisch isolierend ausgebildet, und zwar einerseits z.B. dadurch, dass das Messrohr selbst vollständig aus einem Isolierstoff, insb. aus gesinterter Keramik, bevorzugt aus Aluminiumoxid-Keramik, oder aus einem Kunststoff besteht. Andererseits kann das Messrohr auch dadurch realisiert sein, dass ein nicht-ferromagnetisches Metallrohr, insb. ein rostfreies Stahlrohr, innen mit einer Isolierschicht aus einem geeigneten Kunststoff, insb. aus Hartgummi, Weichgummi oder Polyfluorethylen, bevorzugt Polytetrafluorethylen, ausgekleidet ist.

Die magnetfelderzeugende Vorrichtung ist außerhalb des Messrohres angeordnet und komplett anliegend, teilweise anliegend oder mit einem festen Abstand zum Messrohr befestigt.

Vorteilhafte Ausgestaltung der Erfindung sind Gegenstand der Unteransprüche.

Gemäß einer Ausgestaltung der Erfindung wird für die Testmessung eine rotationsunsymmetrische Strömung durch eine an die einlaufseitige Stirnfläche eingerichtete und mindestens eine Störquelle umfassende Störung erzeugt.

Die Testmessung kann auch zur Abstimmung der optimalen Winkel $\alpha$ und $\beta$ dienen und wird dann im Voraus durchgeführt, so dass unter Berücksichtigung des Winkelpaares ($\alpha$ - $\beta$) ein strömungsprofilunabhängiges magnetisch-induktives Durchflussmessgerät realisiert wird.

Die Testmessung kann viele verschiedene Störquellen beinhalten, die alle einen beliebigen Einbauwinkel annehmen können. Durch die Verwendung von ausreichend unterschiedlichen Störungen kann der Winkel $\alpha$ und $\beta$ dahingehend optimiert werden, dass der Messfehler einer speziellen Störung einen Wert kleiner 0,05% und der maximale Messfehler einer beliebigen Störung einen Wert kleiner 0,5% annimmt.

Es hat sich herausgestellt, dass durch die Verwendung von zwei ausreichend unterschiedlichen Störquellen, insbesondere einer Blende und eines 90°Rohrbogens, ein bereits ausreichend gutes Winkelpaar ($\alpha$ - $\beta$) für ein magnetisch-induktives Durchflussmessgerät ermittelt wird, das für eine beliebig andersartige Störung einen maximalen Messfehler von 0,5% aufweist. Durch Einbeziehen weiterer Störquellen in die Testmessung ändern sich die optimierten Parameter nur marginal, wodurch sich der resultierende Messfehler nur geringfügig ändert.

Gemäß einer Ausgestaltung umfasst die Störquelle eine Blende oder einen 90°Rohrbogen, wobei durch die Blende 10% des Querschnitts des Messrohres abgedeckt wird, wobei die Blende eine Kreissehe aufweist, welche die Blende zum Rohr hin begrenzt, wobei die Blende eine erste Blendenorientierung oder eine zweite Blendenorientierung annimmt, wobei bei der ersten Blendenorientierung die Kreissehne senkrecht zum Magnetfeld orientiert ist und bei der zweiten Blendenorientierung die Kreissehne parallel zum Magnetfeld orientiert ist, wobei der 90°Rohrbogen eine erste Rohrbogenorientierung oder eine zweite Rohrbogenorientierung annimmt, wobei sich die erste Rohrbogenorientierung durch eine senkrecht zum Magnetfeld und zur Längsrichtung des Messrohres verlaufende Rohrachse auszeichnet und die zweite Rohrbogenorientierung durch eine parallel zum Magnetfeld und senkrecht zur Längsrichtung des Messrohres verlaufende Rohrachse auszeichnet.

Bislang wird dem Nutzer von magnetisch-induktiven Durchflussmessgeräten eine vorgeschriebene Einlaufstrecke vorgegeben. Diese vorgeschriebene Einlaufstrecke ist notwendig, um den für das Gerät spezifizierten Messfehler einzuhalten. Die auftretenden Messfehler müssen einmalig pro Störungstyp, Abstand, Montagewinkel und evtl. Reynoldszahl ermittelt werden. Dies geschieht entweder durch aufwendige Messreihen oder durch Simulationen der Strömungsverhältnisse bei unterschiedlichen Störungen und Auswertung der berechneten Strömungsprofile. Als Ergebnis dieses Schrittes erhält man Daten, die angeben, wie groß der Messfehler ist, der entstehen würde, wenn ein magnetisch-induktives Durchflussmessgerät in die entsprechende Position eingebaut werden würde und wie groß der Messfehler ist, wenn der Aufbau um weitere Elektrodenpaare ergänzt oder die magnetfelderzeugende Vorrichtung angepasst wird.

Gemäß einer weiteren Ausgestaltung ist die Störung mit Abstand 0-DN zur einlaufseitigen Stirnfläche eingerichtet.

Gemäß einer Weiterbildung ist eine Unempfindlichkeit gegenüber einem rotationsunsymmetrischen Strömungsprofil bei einer Reynoldszahl des Mediums im Messrohr größer gleich 10.000, insbesondere größer gleich 50.000 und bevorzugt größer gleich 100.000 gegeben.

Gemäß einer weiteren Ausgestaltung weist das Durchflussmessgerät drei Elektrodenpaare auf.

Die Elektrodenpaare müssen dabei nicht notwendigerweise diametral angeordnet sein. Die mindestens zwei Elektrodenpaare sind mit dem Messmedium galvanisch oder kapazitiv gekoppelt. Erfindungsgemäß sind mindestens zwei Elektroden, insbesondere alle auf jeweils einer Seite des Messrohres bezüglich der vertikalen Messrohr-Längsebene befindlichen Elektroden kurzgeschlossen.

Der technische Erfolg dieser Ausgestaltung der Erfindung besteht darin, dass gefunden wurde, dass durch das Anpassen der Winkel $\alpha$ und $\beta$ auf eine Abtas-

tung der einzelnen Potentialdifferenzen mit Hinzunahme von empirisch bestimmte Gewichtungsfaktoren verzichtet werden kann und die anliegende Spannung über alle Elektroden im Falle einer Störung weniger als 0,5% von einem anhand eines voll ausgebildeten Strömungsprofils ermittelten Messwertes abweicht. Eine Gewichtung der einzelnen Spannungswerte ist somit nicht notwendig, wodurch die Auswerteeinheit zur Bestimmung der anliegenden Spannung und der daraus resultierenden Strömungsgeschwindigkeit deutlich vereinfacht werden kann. Es reicht nunmehr den gemessenen Spannungswert mittels einer Kalibration in eine Strömungsgeschwindigkeit oder einen Volumendurchfluss umzuwandeln.

Die Elektroden werden insbesondere durch Kabel miteinander kurzgeschlossen und bevorzugt durch ein leitfähiges Blechteil. Das bietet eine einfache und stabile Montage und liefert zusätzlich eine kostengünstige Alternative zu bekannten Lösungen.

Die Elektroden sind mit einer Regel- und Auswerteeinheit verbunden, die anhand der in den Elektroden induzierten Spannung Informationen über die Durchflussgeschwindigkeit und den Volumendurchfluss im Messrohr liefert.

Erfindungsgemäß gilt für den Winkel $\alpha$, dass $30° \leq \alpha \leq 60°$ ist und insbesondere, dass $40° \leq \alpha \leq 50°$ ist.

Erfindungsgemäß gilt für den Winkel $\beta$, dass $50° \leq \beta \leq 90°$ ist und insbesondere, dass $70° \leq \beta \leq 80°$ ist.

Das Abstimmen der Winkel $\alpha$ und $\beta$ wird mit einem Simulationsprogramm oder anhand eines Testaufbaus durchgeführt.

Gemäß einer weiteren Ausgestaltung umfasst die magnetfelderzeugende Vorrichtung zum Erzeugen eines senkrecht zur Längsrichtung des Messrohres stehenden Magnetfeldes im Medium mindestens eine Sattelspule oder mindestens einen Polschuh mit aufgesetzter Spule.

Üblicherweise umfasst die magnetfelderzeugende Vorrichtung zwei diametral angeordnete Spulensysteme. In einem handelsüblichen magnetisch-induktiven Durchflussmessgerät werden gewöhnlich Sattelspulen oder Polschuhe mit aufgesetzten Spulen verbaut. Sie umgreifen das Messrohr und spannen einen Bereich auf, in dem das Magnetfeld im Medium annähernd homogen bzw. senkrecht zur Abszissenachse verläuft.

Gemäß einer weiteren Ausgestaltung sind die Elektroden achsensymmetrisch zur vertikalen Messrohr-Längsebene angeordnet.

Gemäß einer weiteren Ausgestaltung schlagen jeweils zwei auf einer Seite des Messrohres befindlichen, benachbarten Elektroden einen Winkel $\delta = \alpha/(N - 1)$ in dem Querschnitt auf, wobei die natürliche Zahl N der Anzahl der Elektrodenpaare entspricht.

Eine erfindungsgemäße Messstelle weist ein erfindungsgemäßes magnetisch-induktives Durchflussmessgerät mit einem in einem Abstand von 0-DN an die einlaufseitige Stirnfläche angebrachten Rohrbogen auf.

Gemäß einer Ausgestaltung nimmt der 90°Rohrbogen eine erste Rohrbogenorientierung oder eine zweite Rohrbogenorientierung an, wobei sich die erste Rohrbogenorientierung durch eine senkrecht zum Magnetfeld und zur Längsrichtung verlaufende Rohrachse auszeichnet und die zweite Rohrbogenorientierung durch eine parallel zum Magnetfeld und senkrecht zur Längsrichtung verlaufende Rohrachse auszeichnet.

Gemäß einer Ausgestaltung wird für die Testmessung eine rotationsunsymmetrische Strömung durch den an die einlaufseitige Stirnfläche eingerichteten 90°Rohrbogen erzeugt, wobei der 90°Rohrbogen eine erste Rohrbogenorientierung oder eine zweite Rohrbogenorientierung annimmt. Da für die Messstelle im Speziellen ein 90°Rohrbogen an die einlaufseitige Stirnfläche des Messrohres angebracht ist, beschränken sich die Testmessungen für die Ermittlung des optimalen Winkelpaares ($\alpha$ - $\beta$) auf eine Störung bestehend aus einem 90°Rohrbogen mit einer ersten Rohrbogenorientierung oder einer zweiten Rohrbogenorientierung. Eine erfindungsgemäße Messstelle bestehend aus einem magnetisch-induktiven Durchflussmessgerät in Kombination mit einem 90°Rohrbogen weist aufgrund der individuellen Anpassung der Winkel $\alpha$ und $\beta$ in den Testmessungen einen geringeren Messfehler auf, als ein magnetisch-induktives Durchflussmessgerät, dass auf ausreichend unterschiedliche Störquellen hin optimiert ist und ein an die einseitige Stirnfläche des Messrohres mit einem Abstand von 0-DN angebrachter 90°Rohrbogen.

Gemäß einer Ausgestaltung gilt für den Winkel $\alpha$, dass $30° \leq \alpha \leq 60°$ ist und insbesondere, dass $40° \leq \alpha \leq 50°$ ist, wobei für den Winkel $\beta$ gilt, dass $50° \leq \beta \leq 90°$ ist und insbesondere, dass $70° \leq \beta \leq 80°$ ist.

Gemäß einer Ausgestaltung weist die Messstelle ein Durchflussmessgerät mit drei Elektrodenpaaren auf.

Gemäß einer Ausgestaltung sind mindestens zwei Elektroden, insbesondere alle auf jeweils einer Seite des Messrohres bezüglich der vertikalen Messrohr-Längsebene befindlichen Elektroden kurzgeschlossen.

Gemäß einer Ausgestaltung werden die Elektroden mit einem Stanzbiegeteil kurzgeschlossen.

Die Erfindung wird im Folgenden anhand von Ausführungsbeispielen unter Bezugnahme auf die beiliegenden Figuren der Zeichnung näher erläutert. Es zeigt:

Fig.1a: eine schematische Darstellung einer Ausführungsform des erfindungsgemäßen magnetisch-induktiven Durchflussmessgerätes,

Fig.1b: eine schematische Darstellung eines Längsschnittes des Messrohres (1),

Fig.2a: zwei schematische Darstellungen einer Blende (B) mit jeweils einer ersten Blendenorientierung (B1) und einer zweiten Blendenorientierung (B2),

Fig.2b: zwei schematische Darstellungen eines 90°Rohrbogens (90°R) mit jeweils einer ersten Rohrbogenorientierung (R1) und einer zweiten Rohrbogenorientierung (R2),

Fig.3: eine schematische Darstellung einer Ausgestaltung der Messkonfiguration, in der alle auf einer Seite befindlichen Elektroden kurzgeschlossen sind,

Fig.4: eine Übersicht des Messfehlers in Abhängigkeit von den Winkeln $\alpha$ und $\beta$ für ein 80-DN Messrohr und

Fig.5: die maximale Abweichung der gemessenen Durchflussgeschwindigkeit aufgrund eines gestörten Strömungsprofils in Abhängigkeit von der Nennweite des Messrohres für drei unterschiedliche Elektroden- und Vorrichtungskonfigurationen unter Verwendung von drei Elektrodenpaaren.

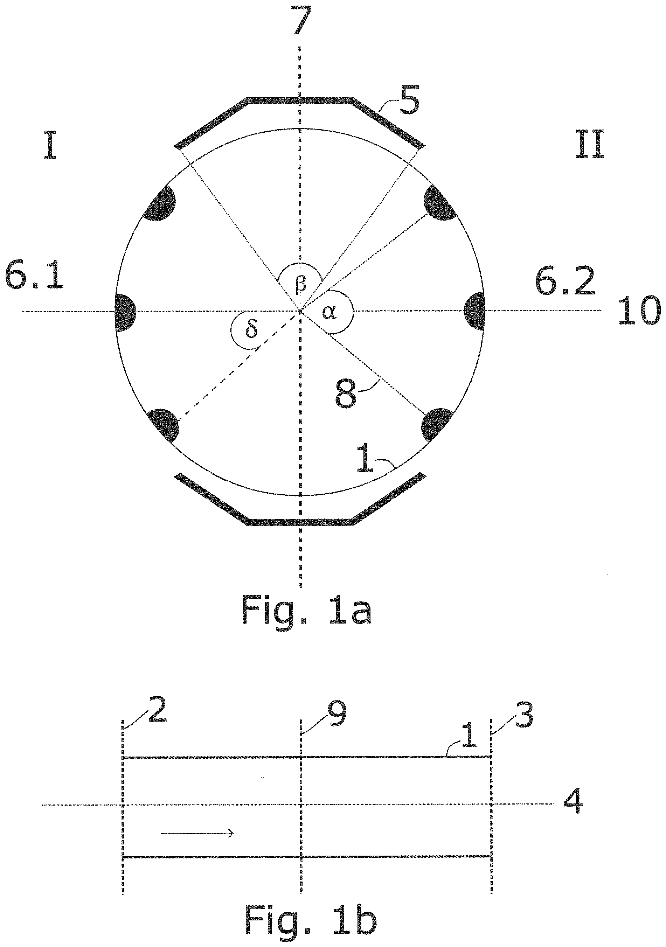

Der Aufbau und das Messprinzip eines magnetisch-induktiven Durchflussmessgerätes ist grundsätzlich bekannt. Fig.1a zeigt einen schematischen Querschnitt (9) eines bekannten magnetisch-induktiven Durchflussmessgerätes. Durch ein Messrohr (1) wird ein Medium geleitet, das eine elektrische Leitfähigkeit aufweist. Eine magnetfelderzeugende Vorrichtung (5) ist so angebracht, dass sich die Magnetfeldlinien senkrecht zu einer durch die Messrohrachse definierten Längsrichtung (4) orientieren. Als magnetfelderzeugende Vorrichtung (5) eignet sich vorzugsweise eine Sattelspule oder ein Polschuh mit aufgesetzter Spule. Bei angelegtem Magnetfeld entsteht im Messrohr (1) eine Potentialverteilung, die mit zwei an der Innenwand des Messrohres (1) angebrachten Elektroden abgegriffen werden kann. In der Regel sind diese diametral angeordnet und bilden eine Elektrodenachse, die senkrecht zu den Magnetfeldlinien und der Längsrichtung (4) verläuft. Anhand der gemessenen Spannung kann, unter Berücksichtigung der magnetischen Flussdichte, die Durchflussgeschwindigkeit des Mediums u und, unter Berücksichtigung der Rohrquerschnittsfläche, der Volumendurchfluss V bestimmt werden. Um das Ableiten der an dem Elektrodensystem (6) anliegenden Spannung über die Rohrleitung zu verhindern, wird die Innenwand mit einem isolierenden Material verkleidet. Das durch beispielsweise einen Elektromagneten aufgebaute Magnetfeld wird durch einen getakteten Gleichstrom wechselnder Polarität erzeugt. Dies gewährleistet einen stabilen Nullpunkt und macht die Messung unempfindlich gegenüber Einflüssen durch Mehrphasenstoffe, Inhomogenitäten in der Flüssigkeit oder geringer Leitfähigkeit.

Erfindungsgemäß werden mindestens zwei Elektrodenpaare für die Bestimmung des Volumendurchflusses V verwendet. In einer schematischen Darstellung, Fig.1a, wird beispielhaft ein magnetisch-induktives Durchflussmessgerät mit drei Elektrodenpaaren abgebildet.

Neben dem Elektrodensystem (6), das zum Abgreifen einer Potentialdifferenz dient, werden oftmals zusätzliche Elektroden in Form von Messstoffüberwachungs- oder Erdungselektroden in das Messrohr (1) eingebaut, die dazu dienen, ein elektrisches Referenzpotential zu messen oder teilgefüllte Messrohre (1) zu erkennen oder die Temperatur des Mediums mittels eingebautem Temperaturfühler zu erfassen. Diese werden in der schematischen Darstellung der Fig.1 nicht berücksichtigt.

Dabei liegt jeweils eine erste Elektrode (6.1) des Elektrodenpaares auf der ersten Seite (I) des Messrohres (1) und eine zweite Elektrode (6.2) des Elektrodenpaares auf der zweiten Seite (II). Die außenliegenden Elektroden einer Seite spannen einen Winkel $\alpha$ im Querschnitt (9) auf. Die weiteren Elektroden verteilen sich innerhalb des aufgeschlagenen Kreissegments, bevorzugt an der Innenwand des Messrohres (1).

Bei dem in Fig.1a dargestellten Durchflussmessgerät befindet sich das Elektrodensystem (6) in direktem Kontakt mit dem Medium; die Kopplung kann jedoch, wie oben erwähnt, auch kapazitiv erfolgen.

Ein magnetisch-induktives Durchflussmessgerät umfasst eine einlaufseitige Stirnfläche (2) und eine auslaufseitige Stirnfläche (3) (siehe Fig.1b). In Fig.1b deutet ein Pfeil die Flussrichtung des Mediums an. Ein an die einlaufseitige Stirnfläche (2) montierter 90°Rohrbogen (90°R) oder eine Blende (B) wirken sich auf das Strömungsprofil des Mediums aus, so dass im Messrohr (1) ein rotationsunsymmetrisches Strömungsprofil herrscht.

Die magnetfelderzeugende Vorrichtung (5) ist üblicherweise so konzipiert, dass sich die Magnetfeldlinien möglichst homogen über den Querschnitt (9) des Messrohres verteilen. Dadurch können besonders für voll ausgebildete Strömungsprofile Messfehler von unter 0,2% erreicht werden. Bei einem rotationsunsymmetrischen Strömungsprofil kann sich ein homogenes Magnetfeld nachteilig auf die Messgenauigkeit auswirken. Dieses Problem kann erfinderisch durch das Anpassen der magnetfelderzeugenden Vorrichtung (5) gelöst werden, insbesondere durch das Anpassen des Kreisbogenwinkels $\beta$.

Durch die Variation des Winkels $\beta$, der beschreibt in wieweit ein an das Messrohr (1) angebrachtes Segment der magnetfelderzeugenden Vorrichtung (5) das Messrohr (1) umgreift, erhält man einen weiteren Freiheitsgrad für die Reduzierung des Messfehlers. Ein das Magnetfeld in das Medium einkoppelndes Segment kann einen Polschuh umfassen, der zwei an eine ebene Fläche angrenzende Schenkel oder auch zwei an seiner ebenen Fläche angebrachte Kreisbögen aufweist. Alternativ kann ein Polschuh auch die Form eines Kreisbogens annehmen. Im Allgemeinen kann ein das Magnetfeld in das Medium einkoppelndes Segment eine beliebige Kontur, bestehend aus mindestens einem weiteren Teilsegment, annehmen. Für die Ermittlung des maximalen Kreisbogenwinkels $\beta$ werden die Teilsegmente

berücksichtigt, die im Wesentlichen dafür verantwortlich sind, das Magnetfeld in das Medium einzukoppeln.

Die Messfehler der Durchflussgeschwindigkeit u bzw. des Volumendurchflusses V sind $\Delta_u = \left|\frac{u_{va}-u_S}{u_{va}}\right|$ bzw. $\Delta_{\dot{V}} = \left|\frac{\dot{V}_{va}-\dot{V}_S}{\dot{V}_{va}}\right|$, wobei die Durchflussgeschwindigkeit $u_{va}$ und der Volumendurchfluss $\dot{V}_{va}$ im Falle einer Strömung mit voll ausgebildeten Strömungsprofil bestimmt werden, und die Durchflussgeschwindigkeit $u_S$ und der Volumendurchfluss $\dot{V}_S$ im Falle eines rotationsunsymmetrischen Strömungsprofils bestimmt werden. Dabei ist der reale Volumendurchfluss $\dot{V}_{real}$ in beiden Fällen identisch und im Falle des voll ausgebildeten Strömungsprofils optimalerweise gleich dem gemessenen Volumendurchfluss $\dot{V}_{va}$.

In den Simulationen bildet ein magnetisch-induktives Durchflussmessgerät mit drei Elektrodenpaaren die Grundlage für Berechnung der optimalen Parameter. Die Fläche der Elektroden ist größer als punktförmig, jedoch endlich groß. Die Optimierung der Winkel $\alpha$ und $\beta$ läuft in folgenden Schritten ab:

Im ersten Schritt werden die Winkel $\alpha$ und $\beta$ so angepasst, dass der Messfehler der Durchflussgeschwindigkeit in Testmessungen mit einer einzelnen Störung minimal wird. Dabei wird die Störung durch eine Blende (B) oder einen 90°Rohrbogen (90°R) generiert.

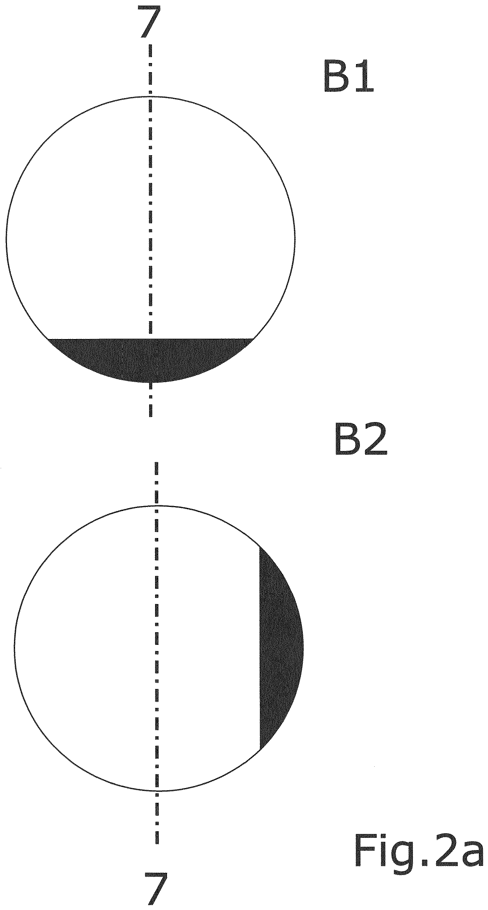

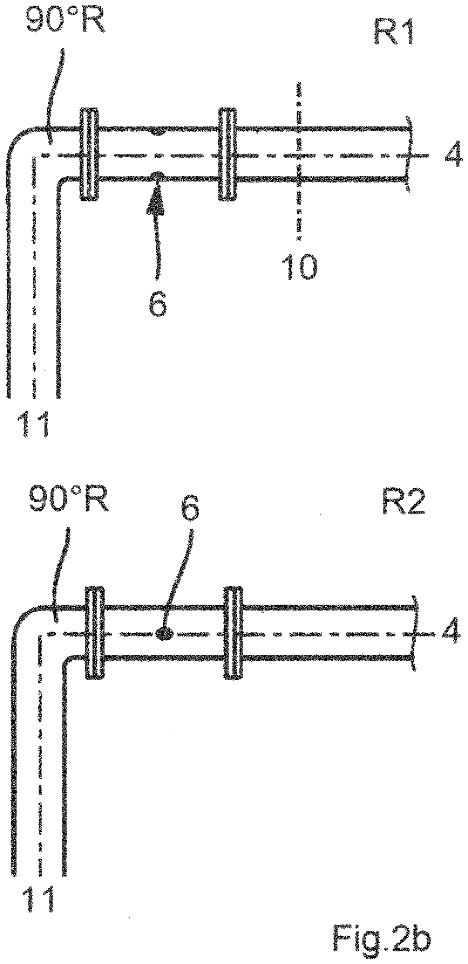

Die Blende (B) deckt dabei 10% des Rohrquerschnitts (9) ab und weist eine Kreissehne auf, welche die Blende zum Rohr hin begrenzt. Sie nimmt eine erste Blendenorientierung (B1) oder eine zweite Blendenorientierung (B2) an, die insbesondere um 90° zueinander verdreht sind. Dabei ist die Kreissehne bei der ersten Blendenorientierung (B1) senkrecht zum Magnetfeld und bei der zweiten Blendenorientierung (B2) parallel zum Magnetfeld orientiert. Die erste Blendenorientierung (B1) und die zweite Blendenorientierung (B2) einer Blende (B) ist schematisch in Fig.2a dargestellt. Das schwarz gefüllte Kreissegment stellt dabei die Fläche dar, die einen Teil der Querschnittsfläche des Messrohres blockiert. In der Testmessung ist die Blende (B) mit einem Abstand von 0-DN zur einlaufseitigen Stirnfläche (2) angebracht. Alternativ wird ein 90°Rohrbogen (90°R) eingangs zur einlaufseitigen Stirnfläche (2) in einem Abstand von 0-DN angebracht, wobei der 90°Rohrbogen (90°R) eine erste Rohrbogenorientierung (R1) oder eine zweite Rohrbogenorientierung (R2) annimmt, die insbesondere um 90° zueinander verdreht sind. Die erste Rohrbogenorientierung (R1) und die zweite Rohrbogenorientierung (R2) eines 90°Rohrbogens (90°R) ist schematisch in Fig.2b dargestellt. Die Anpassung der Winkel $\alpha$ und $\beta$ wird vorzugsweise für die beiden Störungen mit beiden Orientierungen durchgeführt.

Im zweiten Schritt wird das Winkelpaar bestimmt, dessen maximaler Messfehler für alle durchgeführten Testmessungen minimal ist.

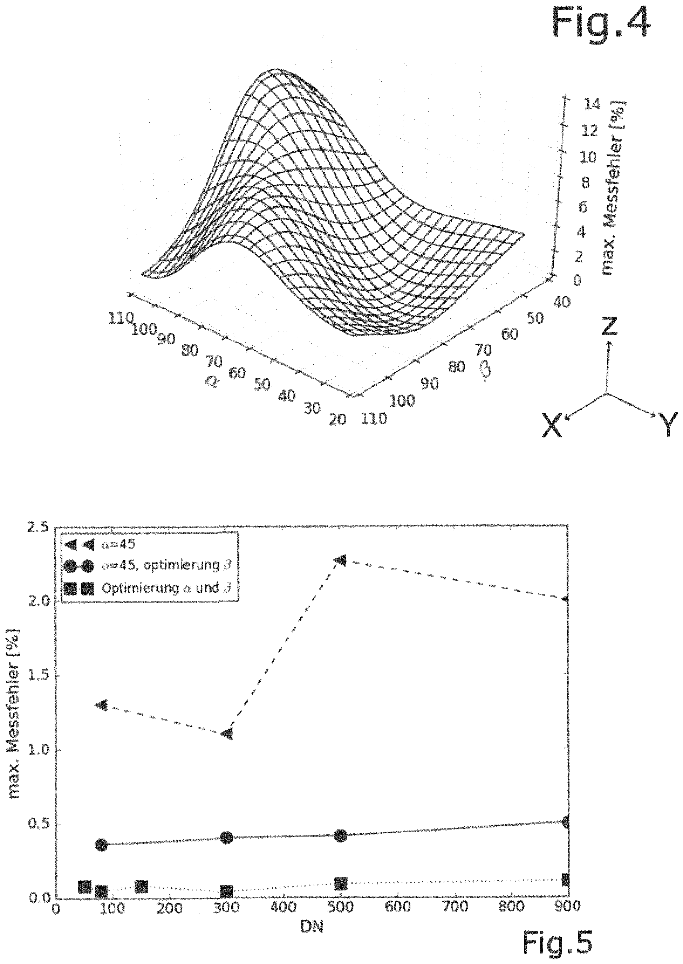

In Fig.4 ist beispielhaft der simulierte Messfehler (Z-Achse) für ein 500-DN Messrohr (1) in Abhängigkeit vom Winkel $\alpha$ (Y-Achse) und vom Winkel $\beta$ (X-Achse) aufgetragen. Anhand des Verlaufes wird das Minimum des Messfehlers für eine spezifische Störung, hier ein Rohrbogen (90°R) optimiert bzgl. einer ersten und zweiten Rohrbogenorientierung (R1, R2), ermittelt. Dabei zeichnet sich die erste Rohrbogenorientierung (R1) durch eine senkrecht zum Magnetfeld und zur Längsrichtung (4) verlaufende Rohrachse (11) und die zweite Rohrbogenorientierung (R2) durch eine parallel zum Magnetfeld und senkrecht zur Längsrichtung (4) verlaufende Rohrachse (11) aus (siehe Fig.2b). Dieses Vorgehen wird für alle oben genannten Störungen wiederholt, wobei im letzten Schritt das Winkelpaar ermittelt wird, das den kleinsten Messfehler bezüglich aller Testmessungen aufweist. Die Werte für die Winkel $\alpha$ und $\beta$ werden solange angepasst, bis der resultierende Messfehler für alle Testmessungen kleiner 0,5%, bevorzugt kleiner 0,2% ist.

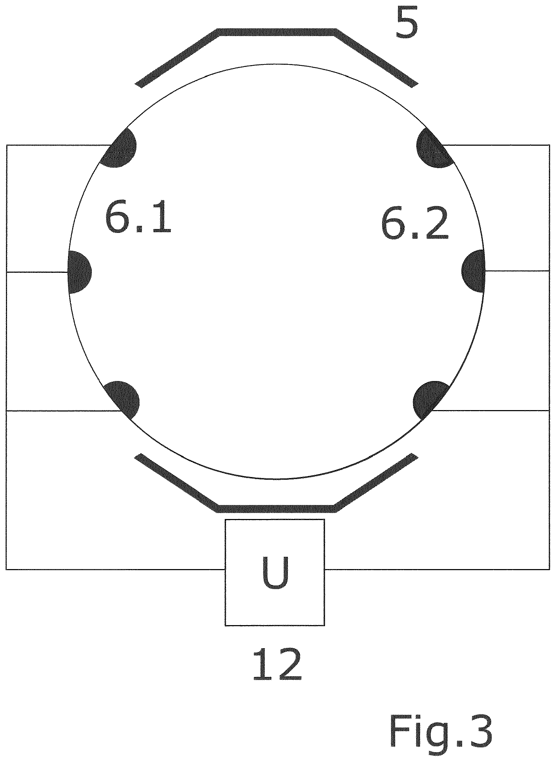

Fig.3 zeigt eine bevorzugte Messkonfiguration, in der die einzelnen auf einer Seite befindlichen Elektroden Seite kurzgeschlossen werden. Die gemessene Spannung entspricht einer mittleren Spannung über alle Elektroden. Beispielsweise werden die Elektroden einseitig durch einzelne Kabel oder mit einem formangepassten Blechteil kurzgeschlossen und mit einer Regel- und Auswerteeinheit (12) verbunden.

Fig.5 zeigt den maximalen Messfehler der gemessenen Durchflussgeschwindigkeit aufgrund eines gestörten Strömungsprofils in Abhängigkeit von der Nennweite des Messrohres (1) für drei unterschiedliche Elektroden- und Vorrichtungskonfigurationen unter Verwendung von drei Elektrodenpaaren. Der maximale Messfehler ergibt sich dabei aus dem höchsten Messfehler für das Winkelpaar ($\alpha$ - $\beta$) in Bezug auf alle durchgeführten Testmessungen. Die Dreiecke zeigen den maximalen Messfehler für ein magnetisch-induktives Durchflussmessgerät mit einem Winkel $\beta$, der beispielsweise bei einem magnetisch-induktiven Durchflussmessgerät der Reihe Promag W der Firma Endress+Hauser verwendet wird. Für den Winkel $\alpha$ wird gemäß EP 0 878 694 A1 eine Winkelweite von 45° angenommen. Unter Optimierung der Gewichtung der ermittelten Spannungswerte erhält man einen maximalen Messfehler von 1% für ein Messrohr (1) mit 50-DN und einen maximalen Messfehler von 2,25% für ein Messrohr (1) mit 900-DN. Die Kreise zeigen Ergebnisse von Simulationen bei denen auch der Winkel $\beta$ für die Optimierung variiert wird und der Winkel $\alpha$ konstant bei 45° gehalten wird. Durch die Verwendung von $\beta$ als zusätzlich Optimierungsparameter kann der Messfehler bei einem unsymmetrischen Strömungsprofil deutlich reduziert werden. Die Quadrate zeigen Ergebnisse von Simulationen bei denen zusätzlich zum variablen Winkel $\beta$ auch der Winkel $\alpha$, der den Elektrodenbereich aufschlägt, für die Optimierung als variable angenommen. In diesem Fall wird auf eine Gewichtung der einzelnen an den Elektrodenpaaren anliegenden Spannung verzichtet, was kurzgeschlossene Elektroden entspricht.

Dadurch kann die aufgrund eines rotationsunsymmetrischen Strömungsprofils entstandene Messfehler noch einmal halbiert werden. Für die Ermittlung der optimalen Winkel $\alpha$ und $\beta$ wurden Störungen umfassend eine Blende (B) mit einer ersten Blendenorientierung (B1), eine Blende (B) mit einer zweiten Blendenorientierung (B2), einen 90°Rohrbogen (90°R) mit einer Rohrbogenorientierung (R1) und einen 90°Rohrbogen (90°R) mit einer Rohrbogenorientierung (R2) verwendet.

Basierend auf dem oben beschriebenen Optimierungsverfahren weist ein magnetisch-induktives Durchflussmessgerät mit drei Elektrodenpaaren, einem 150-DN Messrohr (1) und einem Medium mit einer Durchflussgeschwindigkeit von 1 m/s einen Messfehler von 0,15% auf bei einer eingesetzten Blende (B) mit Blendenorientierung (B1) und einen Messfehler von 0,01% bei einer eingesetzten Blende (B) mit Blendenorientierung (B2).

Basierend auf dem oben beschriebenen Optimierungsverfahren weist ein magnetisch-induktives Durchflussmessgerät mit drei Elektrodenpaaren, einem 150-DN Messrohr (1) und einem Medium mit einer Durchflussgeschwindigkeit von 1 m/s einen Messfehler von 0,05% auf bei einem eingesetzten 90°Rohrbogen (90°R) mit Rohrbogenorientierung (R1) und einen Messfehler von 0,02% bei einem eingesetzten 90°Rohrbogen (90°R) mit Rohrbogenorientierung (R2).

Basierend auf dem oben beschriebenen Optimierungsverfahren weist ein magnetisch-induktives Durchflussmessgerät mit drei Elektrodenpaaren, einem 300-DN Messrohr (1) und einem Medium mit einer Durchflussgeschwindigkeit von 1 m/s einen Messfehler von 0,04% auf bei einer eingesetzten Blende (B) mit Blendenorientierung (B1) und einen Messfehler von 0,21% bei einer eingesetzten Blende (B) mit Blendenorientierung (B2).

Basierend auf dem oben beschriebenen Optimierungsverfahren weist ein magnetisch-induktives Durchflussmessgerät mit drei Elektrodenpaaren, einem 300-DN Messrohr (1) und einem Medium mit einer Durchflussgeschwindigkeit von 1 m/s einen Messfehler von 0,04% auf bei einem eingesetzten 90°Rohrbogen (90°R) mit Rohrbogenorientierung (R1) und einen Messfehler von 0,15% bei einem eingesetzten 90°Rohrbogen (90°R) mit Rohrbogenorientierung (R2).

Basierend auf dem oben beschriebenen Optimierungsverfahren weist ein magnetisch-induktives Durchflussmessgerät mit drei Elektrodenpaaren, einem 500-DN Messrohr (1) und einem Medium mit einer Durchflussgeschwindigkeit von 1 m/s einen Messfehler von 0,07% auf bei einer eingesetzten Blende (B) mit Blendenorientierung (B1) und einen Messfehler von 0,04% bei einer eingesetzten Blende (B) mit Blendenorientierung (B2).

Basierend auf dem oben beschriebenen Optimierungsverfahren weist ein magnetisch-induktives Durchflussmessgerät mit drei Elektrodenpaaren, einem 500-DN Messrohr (1) und einem Medium mit einer Durchflussgeschwindigkeit von 1 m/s einen Messfehler von 0,18% auf bei einem eingesetzten 90°Rohrbogen (90°R) mit Rohrbogenorientierung (R1) und einen Messfehler von 0,09% bei einem eingesetzten 90°Rohrbogen (90°R) mit Rohrbogenorientierung (R2).

**Bezugszeichenliste**

| | |
|---|---|
| 1 | Messrohr |
| 2 | einlaufseitige Stirnfläche |
| 3 | auslaufseitige Stirnfläche |
| 4 | Längsrichtung |
| 5 | magnetfelderzeugende Vorrichtung |
| 6 | Elektrodensystem |
| 6.1 | Erste Elektrode eines Elektrodenpaares |
| 6.2 | Zweite Elektrode eines Elektrodenpaares |
| 7 | vertikale Messrohr-Längsebene |
| 8 | Radius |
| 9 | Querschnitt |
| 10 | Abszissenachse |
| 11 | Rohrachse |
| 12 | Regel- und Auswerteeinheit |
| B | Blende |
| B1 | Erste Blendenorientierung |
| B2 | Zweite Blendenorientierung |
| 90°R | 90°Rohrbogen/Krümmer |
| R1 | Erste Rohrbogenorientierung |
| R2 | Zweite Rohrbogenorientierung |
| I | Erste Seite |
| II | Zweite Seite |

**Patentansprüche**

1. Magnetisch-induktives Durchflussmessgerät zur Messung der Durchflussgeschwindigkeit u oder des Volumendurchflusses $\dot{V}$ eines Mediums, umfassend:

- ein Messrohr (1), zum Führen des Mediums in eine durch eine Messrohrachse definierte Längsrichtung (4), wobei das Messrohr eine einlaufseitige Stirnfläche (2) und eine auslaufseitige Stirnfläche (3), welche das Messrohr (1) in Längsrichtung (4) abgrenzen, aufweist;
- mindestens eine in Richtung eines Querschnitts (9) des Messrohres (1) positionierte, magnetfelderzeugende Vorrichtung (5) zum Erzeugen eines im Wesentlichen senkrecht zur Längsrichtung (4) stehenden Magnetfeldes im Medium;

o wobei die magnetfelderzeugende Vorrichtung (5) ein an das Messrohr anliegendes oder ein einen vorgegebenen Mindestabstand aufweisendes, das Magnetfeld in das Medium einkoppelndes Segment aufweist,

o wobei das Segment in dem Querschnitt (9) des Messrohres (1) das Messrohr (1) in einem maximalen Kreisbogenwinkel $\beta$ umgreift,

- ein Elektrodensystem (6) mit mindestens zwei Elektrodenpaaren, die dazu eingerichtet sind, eine senkrecht zum Magnetfeld und zur Längsrichtung (4) induzierte Spannung im Medium zu erfassen;

o wobei eine vertikale Messrohr-Längsebene (7) das Messrohr (1) in eine erste Seite (I) und in eine zweite Seite (II) einteilt,
o wobei sich jeweils eine erste Elektrode (6.1) des Elektrodenpaares auf der ersten Seite (I) des Messrohres befindet,
o wobei sich jeweils eine zweite Elektrode (6.2) des Elektrodenpaares auf der zweiten Seite (II) befindet,
o wobei ein Winkel $\alpha$ in dem Querschnitt (9) des Messrohres einen minimalen Kreissektor aufschlägt, in dem sich die auf jeweils einer Seite des Messrohres (1) befindlichen Elektroden (6.1, 6.2) verteilen,

**dadurch gekennzeichnet,**
- **dass** mindestens zwei auf jeweils einer Seite des Messrohres bezüglich der vertikalen Messrohr-Längsebene (7) befindlichen Elektroden kurzgeschlossen sind, und
- **dass** die Winkel $\alpha$ und $\beta$ so aufeinander abgestimmt sind, dass das Durchflussmessgerät in dem Maß unempfindlich gegenüber Abweichungen einer rotationssymmetrischen Strömung ist, dass das magnetisch-induktive Durchflussmessgerät bei einer Testmessung einen Messfehler der Durchflussgeschwindigkeit

$$\Delta_u = \left| \frac{u_{va} - u_S}{u_{va}} \right|$$ und/oder einen Messfehler des

Volumendurchflusses $$\Delta_{\dot{V}} = \left| \frac{\dot{V}_{va} - \dot{V}_S}{\dot{V}_{va}} \right|$$ kleiner 1,0% aufweist,

o wobei $u_{va}$ einer Durchflussgeschwindigkeit entspricht, welche im Falle einer Strömung mit voll ausgebildeten Strömungsprofil bestimmt ist,
o wobei $\dot{V}_{va}$ einem Volumendurchfluss entspricht, welcher im Falle einer Strömung mit voll ausgebildeten Strömungsprofil bestimmt ist,
o wobei $u_S$ einer Durchflussgeschwindigkeit entspricht, welche im Falle einer rotationsunsymmetrischen Strömung bestimmt ist,
o wobei $\dot{V}_S$ einem Volumendurchfluss entspricht, welcher im Falle einer rotationsunsymmetrischen Strömung bestimmt ist.

2. Magnetisch-induktives Durchflussmessgerät nach Anspruch 1,
wobei für die Testmessung eine rotationsunsymmetrische Strömung durch eine an die einlaufseitige Stirnfläche (2) eingerichtete und mindestens eine Störquelle umfassende Störung erzeugt wird.

3. Magnetisch-induktives Durchflussmessgerät nach Anspruch 2,

wobei die Störquelle eine Blende (B) oder einen 90°Rohrbogen (90°R) umfasst,
wobei durch die Blende (B) 10% des Querschnitts des Messrohres (1) abgedeckt wird,
wobei die Blende (B) eine Kreissehne aufweist, welche die Blende zum Rohr hin begrenzt,
wobei die Blende (B) eine erste Blendenorientierung (B1) oder eine zweite Blendenorientierung (B2) annimmt,
wobei bei der ersten Blendenorientierung (B1) die Kreissehne senkrecht zum Magnetfeld orientiert ist und bei der zweiten Blendenorientierung (B2) die Kreissehne parallel zum Magnetfeld orientiert ist,
wobei der 90°Rohrbogen (90°R) eine erste Rohrbogenorientierung (R1) oder eine zweite Rohrbogenorientierung (R2) annimmt,
wobei sich die erste Rohrbogenorientierung (R1) durch eine senkrecht zum Magnetfeld und zur Längsrichtung (4) des Messrohres (1) verlaufende Rohrachse (11) auszeichnet und die zweite Rohrbogenorientierung (R2) durch eine parallel zum Magnetfeld und senkrecht zur Längsrichtung (4) des Messrohres (1) verlaufende Rohrachse (11) auszeichnet.

4. Magnetisch-induktives Durchflussmessgerät nach einem der Ansprüche 1 bis 3,
wobei die Störung mit Abstand 0-DN zur einlaufseitigen Stirnfläche (2) eingerichtet ist.

5. Magnetisch-induktives Durchflussmessgerät nach einem der Ansprüche 1 bis 4,
wobei eine Unempfindlichkeit gegenüber einem rotationsunsymmetrischen Strömungsprofil bei einer Reynoldszahl des Mediums im Messrohr (1) größer gleich 10.000, insbesondere größer gleich 50.000 und bevorzugt größer gleich 100.000 gegeben ist.

6. Magnetisch-induktives Durchflussmessgerät nach einem der Ansprüche 1 bis 5,
wobei das Durchflussmessgerät drei Elektrodenpaare aufweist.

7. Magnetisch-induktives Durchflussmessgerät nach einem der Ansprüche 1 bis 6, wobei für den Winkel $\alpha$ gilt, dass $30° \leq \alpha \leq 60°$ ist und insbesondere, dass $40° \leq \alpha \leq 50°$ ist.

8. Magnetisch-induktives Durchflussmessgerät nach einem der Ansprüche 1 bis 7, wobei für den Winkel $\beta$ gilt, dass $50° \leq \beta \leq 90°$ ist und insbesondere, dass $70° \leq \beta \leq 80°$ ist.

9. Magnetisch-induktives Durchflussmessgerät nach einem der Ansprüche 1 bis 8, wobei die magnetfelderzeugende Vorrichtung (5) zum Erzeugen eines senkrecht zur Längsrichtung (4) des Messrohres stehenden Magnetfeldes im Medium mindestens eine Sattelspule oder mindestens einen Polschuh mit aufgesetzter Spule umfasst.

10. Magnetisch-induktives Durchflussmessgerät nach einem der Ansprüche 1 bis 9, wobei die Elektroden achsensymmetrisch zur vertikalen Messrohr-Längsebene (7) angeordnet sind

11. Magnetisch-induktives Durchflussmessgerät nach einem der Ansprüche 1 bis 10, wobei jeweils zwei auf einer Seite des Messrohres (1) befindlichen, benachbarten Elektroden einen Winkel $\delta = \alpha/(N-1)$ in dem Querschnitt (9) des Messrohres aufschlagen, wobei eine natürliche Zahl N der Anzahl der Elektrodenpaare entspricht.

12. Messstelle zur Ermittlung einer strömungsprofilunabhängigen Durchflussgeschwindigkeit u oder eines Volumendurchflusses $\dot{V}$, umfassend:

    - ein magnetisch-induktives Durchflussmessgerät zur Messung der Durchflussgeschwindigkeit u oder des Volumendurchflusses $\dot{V}$ eines Mediums gemäß einem der Ansprüche 1 bis 11,

    wobei ein 90°Rohrbogen (90°R) mit einem Abstand von 0-DN an die einlaufseitige Stirnfläche (2) angebracht ist.

13. Messstelle nach Anspruch 12,

    wobei der 90°Rohrbogen (90°R) eine erste Rohrbogenorientierung (R1) oder eine zweite Rohrbogenorientierung (R2) annimmt, wobei sich die erste Rohrbogenorientierung (R1) durch eine senkrecht zum Magnetfeld und zur Längsrichtung (4) verlaufende Rohrachse (11) auszeichnet und die zweite Rohrbogenorientierung (R2) durch eine parallel zum Magnetfeld und senkrecht zur Längsrichtung (4) verlaufende Rohrachse (11) auszeichnet.

14. Messstelle nach einem der Ansprüche 12 und 13,

    wobei für die Testmessung eine rotationsunsymmetrische Strömung durch den an die einlaufseitige Stirnfläche (2) eingerichteten 90°Rohrbogen (90°R) erzeugt wird, wobei der 90°Rohrbogen (90°R) eine erste Rohrbogenorientierung (R1) oder eine zweite Rohrbogenorientierung (R2) annimmt.

15. Messstelle nach einem der Ansprüche 12 bis 14,

    wobei für den Winkel $\alpha$ gilt, dass $30° \leq \alpha \leq 60°$ ist und insbesondere, dass $40° \leq \alpha \leq 50°$ ist, wobei für den Winkel $\beta$ gilt, dass $50° \leq \beta \leq 90°$ ist und insbesondere, dass $70° \leq \beta \leq 80°$ ist.

16. Messstelle nach einem der Ansprüche 12 bis 15, wobei die Messstelle ein Durchflussmessgerät mit drei Elektrodenpaaren aufweist.

17. Messstelle nach einem der Ansprüche 12 bis 16, wobei die Elektroden mit einem Stanzbiegeteil kurzgeschlossen werden.

**Claims**

1. Electromagnetic flowmeter designed to measure the flow velocity u or volume flow V of a medium, said flowmeter comprising:

    - a measuring tube (1) designed to conduct the medium in a longitudinal direction (4) defined by a measuring tube axis, wherein the measuring tube has a front face (2) on the inlet side and a front face (3) on the outlet side, wherein said faces delimit the measuring tube (1) in the longitudinal direction (4);
    - at least a unit for generating a magnetic field (5), wherein said unit is positioned in the direction of a cross-section (9) of the measuring tube (1) and wherein said unit is designed to generate a magnetic field in the medium that is essentially perpendicular to the longitudinal direction (4);

        ∘ wherein the unit for generating a magnetic field (5) has a segment that couples the magnetic field into the medium and abuts the measuring tube or has a predefined minimum distance,
        ∘ wherein the segment surrounds the measuring tube (1) in the cross-section (9) of the measuring tube (1) at a maximum circular arc angle $\beta$,

    - an electrode system (6) with at least two pairs of electrodes, which are designed to measure a voltage induced in the medium perpendicular to the magnetic field and to the longitudinal direction (4);

◦ wherein a vertical longitudinal plane (7) of the measuring tube divides the measuring tube (1) into a first side (I) and a second side (II),

◦ wherein a first electrode (6.1) of the electrode pair is located on the first side (I) of the measuring tube,

◦ wherein a second electrode (6.2) of the electrode pair is located on the second side (II)

◦ wherein an angle $\alpha$ in the cross-section (9) of the measuring tube forms a minimum circle segment in which the electrodes (6.1, 6.2) located, in each case, on one side of the measuring tube (1) are distributed,

**characterized in that**

- at least two electrodes located in each case on one side of the measuring tube in relation to the vertical longitudinal plane (7) of the measuring tube are short-circuited, and
- the angles $\alpha$ and $\beta$ are harmonized with one another in such a way that the flowmeter is insensitive to deviations of a rotationally symmetric flow to the extent that, during a test measurement, the electromagnetic flowmeter has a measured error of the flow velocity $$$FORMEL$$$ and/or a measured error of the volume flow $$$FORMEL$$$ that is less than 1.0 %,

◦ wherein $u_{va}$ corresponds to a flow velocity that is determined in the event of a flow with a fully developed flow profile,

◦ wherein $V_{va}$ corresponds to a volume flow that is determined in the event of a flow with a fully developed flow profile,

◦ wherein $u_S$ corresponds to a flow velocity that is determined in the event of a rotationally asymmetric flow,

◦ wherein Vs corresponds to a volume flow that is determined in the event of a rotationally symmetric flow.

2. Electromagnetic flowmeter as claimed in Claim 1, wherein, for the test measurement, a rotationally asymmetric flow is generated by a disturbance installed on the front face (2) on the inlet side and comprising at least one source of disturbance.

3. Electromagnetic flowmeter as claimed in Claim 2,

wherein the source of disturbance comprises an orifice plate (B) or a 90° tube elbow (90°R),

wherein 10 % of the cross-section of the measuring tube (1) is covered by the orifice plate (B), wherein the orifice plate (B) has a chord that limits the orifice plate in relation to the tube, wherein the orifice plate (B) has a first orifice plate orientation (B1) or a second orifice plate orientation (B2), wherein in the case of the first orifice plate orientation (B1) the chord is oriented so that it is perpendicular to the magnetic field and in the case of the second orifice plate orientation (B2) the chord is oriented so that it is parallel to the magnetic field, wherein the 90° tube elbow (90°R) has a first tube elbow orientation (R1) or a second tube elbow orientation (R2), wherein the first tube elbow orientation (R1) is **characterized by** a tube axis (11) running perpendicular to the magnetic field and to the longitudinal direction (4) of the measuring tube (1) and the second tube elbow orientation (R2) is **characterized by** a tube axis (11) running parallel to the magnetic field and perpendicular to the longitudinal direction (4) of the measuring tube (1).

4. Electromagnetic flowmeter as claimed in one of the Claims 1 to 3, wherein the disturbance is installed with a distance 0 DN in relation to the front face (2) on the inlet side.

5. Electromagnetic flowmeter as claimed in one of the Claims 1 to 4, wherein an insensitivity to a rotationally asymmetric flow profile is specified with a Reynolds number of the medium in the measuring tube (1) that is greater than or equal to 10,000, particularly greater than or equal to 50,000 and preferably greater than or equal to 100,000.

6. Electromagnetic flowmeter as claimed in one of the Claims 1 to 5, wherein the flowmeter comprises three pairs of electrodes.

7. Electromagnetic flowmeter as claimed in one of the Claims 1 to 6, wherein the angle $\alpha$ is such that $30° \leq \alpha \leq 60°$ and particularly that $40° \leq \alpha \leq 50°$.

8. Electromagnetic flowmeter as claimed in one of the Claims 1 to 7, wherein the angle $\beta$ is such that $50° \leq \beta \leq 90°$ and particularly that $70° \leq \alpha \leq 80°$.

9. Electromagnetic flowmeter as claimed in one of the Claims 1 to 8, wherein the unit for generating a magnetic field (5) comprises at least a saddle coil or at least a pole shoe with a fitted coil for the purpose of generating a magnetic field in the medium that is perpendicular to the longitudinal direction (4) of the measuring tube.

10. Electromagnetic flowmeter as claimed in one of the Claims 1 to 9,
wherein the electrodes are arranged in an axisymmetric manner in relation to the vertical longitudinal plane of the measuring tube (7).

11. Electromagnetic flowmeter as claimed in one of the Claims 1 to 10,
wherein two neighboring electrodes located on a side of the measuring tube (1) form an angle $\delta = \alpha/(N - 1)$ in the cross-section (9) of the measuring tube, wherein a natural number N corresponds to the number of pairs of electrodes.

12. Measuring point for determining a flow velocity $u$ that is independent of the flow profile or a volume flow $V$, said measuring point comprising

   - an electromagnetic flowmeter designed to measure the flow velocity $u$ or the volume flow $V$ of a medium as claimed in one of the Claims 1 to 11,
   wherein a 90° tube elbow (90°R) is installed on the front face (2) on the inlet side at a distance of 0 DN.

13. Measuring point as claimed in Claim 12,

   wherein the 90° tube elbow (90°R) adopts a first tube elbow orientation (R1) or a second tube elbow orientation (R2),
   wherein the first tube elbow orientation (R1) is **characterized by** a tube axis (11) running perpendicular to the magnetic field and to the longitudinal direction (4) and the second tube elbow orientation (R2) is **characterized by** a tube axis (11) running parallel to the magnetic field and perpendicular to the longitudinal direction (4).

14. Measuring point as claimed in one of the Claims 12 and 13,
wherein a rotationally asymmetric flow is generated for the test measurement by the 90° tube elbow (90°R) installed on the front face (2) on the inlet side, wherein the 90° tube elbow (90°R) adopts a first tube elbow orientation (R1) or a second tube elbow orientation (R2).

15. Measuring point as claimed in one of the Claims 12 to 14,

   wherein the angle $\alpha$ is such that $30° \leq \alpha \leq 60°$ and particularly such that $40° \leq \alpha \leq 50°$,

   wherein the angle $\beta$ is such that $50° \leq \beta \leq 90°$ and particularly such that $70° \leq \beta \leq 80°$.

16. Measuring point as claimed in one of the Claims 12 to 15,
wherein the measuring point comprises a flowmeter with three pairs of electrodes

17. Measuring point as claimed in one of the Claims 12 to 16,
wherein the electrodes are short-circuited with a stamped and bent part.

**Revendications**

1. Débitmètre électromagnétique destiné à la mesure de la vitesse d'écoulement $u$ ou du débit volumique $V$ d'un produit, lequel débitmètre comprend :

   - un tube de mesure (1) destiné à guider le produit dans une direction longitudinale (4) définie par un axe de tube de mesure, le tube de mesure présentant une face frontale (2) côté entrée et une face frontale (3) côté sortie, lesquelles faces délimitent le tube de mesure (1) dans la direction longitudinale (4) ;
   - au moins un dispositif générateur de champ magnétique (5), lequel dispositif est positionné en direction d'une section transversale (9) du tube de mesure (1) et lequel dispositif est destiné à générer dans le produit un champ magnétique pour l'essentiel perpendiculaire à la direction longitudinale (4) ;

      ○ le dispositif générateur de champ magnétique (5) présentant un segment couplant le champ magnétique dans le produit et s'appliquant contre le tube de mesure ou présentant une distance minimale prédéfinie,
      ○ le segment entourant le tube de mesure (1) dans la section transversale (9) du tube de mesure (1) selon un angle d'arc de cercle $\beta$ maximal,

   - un système d'électrodes (6) avec au moins deux paires d'électrodes, lesquelles sont conçues pour mesurer une tension induite dans le produit perpendiculairement au champ magnétique et à la direction longitudinale (4) ;

      ○ un plan longitudinal vertical (7) du tube de mesure divisant le tube de mesure (1) en un premier côté (I) et en un deuxième côté (II),
      ○ une première électrode (6.1) de la paire d'électrodes se trouvant respectivement sur le premier côté (I) du tube de mesure,

∘ une deuxième électrode (6.2) de la paire d'électrodes se trouvant respectivement sur le deuxième côté (II)

∘ un angle $\alpha$ formant dans la section transversale (9) du tube de mesure un secteur circulaire minimal dans lequel se répartissent les électrodes (6.1, 6.2) se trouvant respectivement sur un côté du tube de mesure (1), **caractérisé**

- **en ce qu'**au moins deux électrodes se trouvant respectivement sur un côté du tube de mesure par rapport au plan longitudinal vertical (7) du tube de mesure sont court-circuitées, et

- **en ce que** les angles $\alpha$ et $\beta$ sont adaptés l'un à l'autre de telle sorte que le débitmètre est insensible aux écarts d'un écoulement à symétrie de révolution si bien que le débitmètre électromagnétique présente, lors d'une mesure de test, un écart de mesure $\$\$\$TERM de la vitesse d'écoulement FORMEL et/ou un écart de mesure $\$\$\$TERM du débit volumétrique FORMEL inférieur $\$\$\$ à 1,0 %,

∘ $u_{va}$ correspondant à une vitesse d'écoulement qui est déterminée dans le cas d'un écoulement avec un profil d'écoulement entièrement formé,

∘ $V_{va}$ correspondant à un débit volumique qui est déterminé dans le cas d'un écoulement avec un profil d'écoulement entièrement formé,

∘ $u_S$ correspondant à une vitesse d'écoulement qui est déterminée dans le cas d'un écoulement asymétrique en rotation,

∘ Vs correspondant à un débit volumique qui est déterminé dans le cas d'un écoulement asymétrique en rotation.

**2.** Débitmètre électromagnétique selon la revendication 1,
pour lequel, pour la mesure de test, un écoulement asymétrique en rotation est généré par une perturbation installée sur la face frontale (2) côté entrée et comprenant au moins une source de perturbation.

**3.** Débitmètre électromagnétique selon la revendication 2,

pour lequel la source de perturbation comprend un diaphragme $\$\$\$ (B) ou un coude de tube à 90° (90°R), 10 % de la section du tube de mesure (1) étant recouverts par le diaphragme (B),
le diaphragme (B) présentant une corde de cercle $\$\$\$ qui limite le diaphragme vers le tube,
le diaphragme (B) adoptant une première orientation de diaphragme (B1) ou une deuxième orientation de diaphragme (B2),

la corde de cercle étant orientée perpendiculairement au champ magnétique pour la première orientation de diaphragme (B1) et la corde de cercle étant orientée parallèlement au champ magnétique pour la deuxième orientation de diaphragme (B2),
le coude de tube à 90° (90°R) adoptant une première orientation de coude de tube (R1) ou une deuxième orientation de coude de tube (R2),
la première orientation de coude de tube (R1) étant **caractérisée par** un axe de tube (11) s'étendant perpendiculairement au champ magnétique et à la direction longitudinale (4) du tube de mesure (1) et la deuxième orientation de coude de tube (R2) étant **caractérisée par** un axe de tube (11) s'étendant parallèlement au champ magnétique et perpendiculairement à la direction longitudinale (4) du tube de mesure (1).

**4.** Débitmètre électromagnétique selon l'une des revendications 1 à 3,
pour lequel la perturbation est installée avec une distance 0 DN par rapport à la face frontale (2) côté entrée.

**5.** Débitmètre électromagnétique selon l'une des revendications 1 à 4,
pour lequel une insensibilité à un profil d'écoulement asymétrique en rotation est donnée pour un nombre de Reynolds du produit dans le tube de mesure (1) supérieur ou égal à 10 000, notamment supérieur ou égal à 50 000 et de préférence supérieur ou égal à 100 000.

**6.** Débitmètre électromagnétique selon l'une des revendications 1 à 5,
le débitmètre comprenant trois paires d'électrodes.

**7.** Débitmètre électromagnétique selon l'une des revendications 1 à 6,
pour lequel l'angle $\alpha$ est tel que $30° \leq \alpha \leq 60°$ et notamment tel que $40° \leq \alpha \leq 50°$.

**8.** Débitmètre électromagnétique selon l'une des revendications 1 à 7,
pour lequel l'angle $\beta$ est tel que $50° \leq \beta \leq 90°$ et notamment tel que $70° \leq \alpha \leq 80°$.

**9.** Débitmètre électromagnétique selon l'une des revendications 1 à 8,
pour lequel le dispositif générateur de champ magnétique (5) comprend, pour générer dans le produit un champ magnétique perpendiculaire à la direction longitudinale (4) du tube de mesure, au moins une bobine en forme de selle ou au moins une pièce polaire avec bobine rapportée.

**10.** Débitmètre électromagnétique selon l'une des revendications 1 à 9,
pour lequel les électrodes sont disposées de manière axisymétrique par rapport au plan longitudinal vertical du tube de mesure (7).

11. Débitmètre électromagnétique selon l'une des revendications 1 à 10,
pour lequel deux électrodes voisines, situées chacune d'un côté du tube de mesure (1), forment un angle $\delta = \alpha/(N - 1)$ dans la section transversale (9) du tube de mesure, un nombre naturel N correspondant au nombre de paires d'électrodes.

12. Point de mesure destiné à la détermination de la vitesse d'écoulement $u$ indépendante du profil d'écoulement ou un débit volumique V, lequel point de mesure comprend

- un débitmètre électromagnétique destiné à la mesure de la vitesse d'écoulement $u$ ou du débit volumique V d'un produit selon l'une des revendications 1 à 11, un coude de tube à 90° (90°R) étant installé à la face frontale (2) côté entrée à une distance de 0 DN.

13. Point de mesure selon la revendication 12,

pour lequel le coude de tube à 90° (90°R) adopte une première orientation de coude de tube (R1) ou une deuxième orientation de coude de tube (R2),
la première orientation de coude de tube (R1) étant **caractérisée par** un axe de tube (11) s'étendant perpendiculairement au champ magnétique et à la direction longitudinale (4) et la deuxième orientation de coude de tube (R2) étant **caractérisée par** un axe de tube (11) s'étendant parallèlement au champ magnétique et perpendiculairement à la direction longitudinale (4).

14. Point de mesure selon l'une des revendications 12 et 13,
pour lequel un écoulement asymétrique en rotation est généré pour la mesure de test par le coude de tube à 90° (90°R) installé sur la face frontale (2) côté entrée, pour lequel le coude de tube à 90° (90°R) adopte une première orientation de coude de tube (R1) ou une deuxième orientation de coude de tube (R2).

15. Point de mesure selon l'une des revendications 12 à 14,

pour lequel l'angle $\alpha$ est tel que $30° \le \alpha \le 60°$ et notamment tel que $40° \le \alpha \le 50°$,
pour lequel l'angle $\beta$ est tel que $50° \le \beta \le 90°$ et notamment tel que $70° \le \beta \le 80°$.

16. Point de mesure selon l'une des revendications 12 à 15,
le point de mesure comprenant un débitmètre à trois paires d'électrodes

17. Point de mesure selon l'une des revendications 12 à 16,
pour lequel les électrodes sont court-circuitées avec une pièce découpée et pliée.

7

I

II

5

6.1

β

α

δ

6.2

10

8

1

Fig. 1a

2

9

3

1

4

Fig. 1b

B1

B2

Fig.2a

Fig.2b

Fig.3

Fig.4

Fig.5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014113408 A1
- CN 101294832 A
- DE 102015113390 A1
- EP 0878694 A1
- US 6094992 A